# EUROPÄISCHE PATENTANMELDUNG

(11) **EP 2 819 274 A1**
(43) Veröffentlichungstag der Anmeldung: **31.12.2014**
(21) Anmeldenummer: 13174332.0
(22) Anmeldetag: 28.06.2013
(51) Int. Cl.: H02K 1/06, H02K 15/02

(54) **Verschiebliches Rotorpaket**

(71) Anmelder: HILTI Aktiengesellschaft, 9494 Schaan (LI)
(72) Erfinder: Mahler, Thomas, 18299 Laage (DE)
(74) Vertreter: Hilti Aktiengesellschaft Corporate Intellectual Property

(57) **Zusammenfassung**

Blechlamelle, insbesondere zur Bildung eines Rotorkerns für eine elektromagnetische Maschine, wobei die Blechlamelle eine Vorderseite und eine Rückseite, einen Grundkörper mit einem Mittelpunkt, einer Innenseite, einer Aussenseite, wenigstens einen ersten Steg und einen zweiten Steg sowie eine zwischen dem ersten Steg und dem zweiten Steg positionierte Nut enthält. Darüber hinaus enthält die Blechlamelle wenigstens eine Ausrichtvorrichtung zum Ausrichten der Blechlamelle zu einer zweiten anliegenden Blechlamelle vorgesehen.

Verfahren zum Herstellen eines Rotorkerns bestehend aus einer Vielzahl an derartigen Blechlamellen bereitgestellt, welches die folgenden Schritte enthält:
- Aneinanderreihen der Blechlamellen zur Bildung eines Rotorkerns, wobei die Ausrichtvorrichtung einer Blechlamelle um einen vorbestimmten Winkel zu der Ausrichtvorrichtung einer jeweils nachfolgenden Blechlamelle angeordnet ist,
- Ausrichten der einzelnen Blechlamellen zueinander mit Hilfe der Ausrichtvorrichtung der entsprechenden Blechlamellen und einer Referenzvorrichtung, und
- Drehen der einzelnen Blechlamellen zueinander mit Hilfe des ersten Verbindungselement und des zweiten Verbindungselement der entsprechenden Blechlamellen.

## Beschreibung

Die vorliegende Erfindung bezieht sich auf eine Blechlamelle, insbesondere zur Bildung eines Rotorkerns für eine elektromagnetische Maschine. Die Blechlamelle enthält hierzu eine Vorderseite, eine Rückseite, einen Grundkörper mit einem Mittelpunkt, eine Innenseite, eine Aussenseite sowie wenigstens einen ersten Steg und einen zweiten Steg. Darüber hinaus ist zwischen dem ersten Steg und dem zweiten Steg eine Nut positioniert.

Darüber hinaus bezieht sich die Erfindung auf ein Verfahren zum Herstellen eines Rotorkerns bestehend aus einer Vielzahl an derartigen Blechlamellen.

Als Rotor, oder auch als Läufer, bezeichnet man den beweglichen, rotierenden Teil einer elektromechanischen Maschine und bildet sozusagen das Gegenstück zu einem Stator oder Läufer, dem feststehenden, unbeweglichen Teil einer elektromechanischen Maschine. Bei der elektromechanischen Maschine kann es sich beispielsweise um einen Elektromotor, einen Generator, einen Hydromotor oder eine Pumpe handeln.

Der Stator besteht für gewöhnlich aus einem zylindrischen Blechpaket, welches aus einer Vielzahl an aufeinander gelegten und miteinander verbundenen Blechlamellen gebildet ist. Die Blechlamellen des Stators sind jeweils im Wesentlichen in Form eines Rings ausgebildet. Jedes dieser Ringelemente weist eine gerade Anzahl an Polelementen auf, die sich von der Innenseite des Ringelements in radialer Erstreckung zum Mittelpunkt des Ringelements erstrecken. Zwischen diesen Polelementen befindet sich jeweils eine Nut. Nachdem die einzelnen Blechlamellen zu dem Blechpaket zusammengefügt sind, bilden die einzelnen Polelemente hintereinander gereiht einen länglichen Polschuh zur Aufnahme jeweils einer Spulenwicklung. Die Spulenwicklung dient zur Erzeugung eines Magnetfeldes, welches wiederum den Rotor zum Rotieren bringt und infolgedessen ein Drehmoment erzeugt, welches auf eine im Rotor befindliche Antriebswelle übertragen wird. Das Blechpaket und insbesondere die Nuten werden zwischen den einzelnen Polelementen mit einer Kunststoffschicht zur Isolation gegen die Spulenwicklung ausgespritzt.

Im Inneren des Stators befindet sich der Rotor, welcher auf der Antriebswelle drehbar in dem von den Spulenwicklungen erzeugten Magnetfeld zwischen den Polschuhen des Stators gelagert ist. Der Rotor besteht für gewöhnlich ebenfalls aus einer Vielzahl an aufeinander gelegten und miteinander verbundenen Blechlamellen. Die Blechlamellen des Rotors enthalten eine im Wesentlichen runden Grundkörper mit einer zentralen Aufnahmeöffnung für die Antriebswelle sowie einer Anzahl an Stegen. Die Stege erstrecken sich in radialer Richtung vom Mittelpunkt des Grundkörpers nach aussen. Zwischen den Stegen befindet sich eine Nut zur Aufnahme jeweils eines Permanentmagneten. Mit Hilfe der Permanentmagnete wird der Rotor in Verbindung mit dem Magnetfeld, welches in den Spulenwicklungen erzeugt wird, in Rotation versetzt. Der Rotorkern wird zum Schutz gegen mechanische Einwirkungen mit einer Kunststoffisolationsschicht überzogen.

Ein Rotor gemäss dem Stand der Technik ist in der deutschen Patentanmeldung DE102007047715 gezeigt. In dieser Druckschrift des Stands der Technik wird ein Rotor für eine elektrische Maschine offenbart. Der Rotor enthält dabei eine Rotorwelle, eine drehfest mit der Rotorwelle verbundene Rotornabe sowie mindestens ein auf der Rotornabe montiertes, mit einer Rotorwicklung, Permanentmagneten oder einem Kurzschlusskäfig bestückten Lamellen-oder Rotorblechpaket. Das Lamellen-oder Rotorblechpaket besteht dabei aus einer Vielzahl von aneinander gereihten und miteinander verbundenen Blechlamellen.

Bei den Blechlamellen handelt es sich üblicherweise um metallische Grundkörper, die aus einer grösseren Blechplatte gestanzt werden. Bei dem Stanzprozess kann jedoch prozessbedingt nicht ausgeschlossen werden, dass die Blechlamellen nicht absolut plan sind und damit eine Wellenform aufweisen. Das Problem von nicht-plan und wellenförmig ausgestanzten Blechlamellen ist umso grösser je dünner die Blechlamellen sind.

Wenn diese wellenförmigen Blechlamellen dann zu dem Rotorkern aufeinander gelegt und miteinander verbunden werden, kumulieren sich diese Ungenauigkeiten bzw. Wellen der einzelnen Blechlamellen zu einem insgesamt schiefen (d.h. hin sich verdreht und/oder gebogen) Rotorkern. Hierdurch sind auch die Nuten zwischen den Stegen und die Aufnahmeöffnung des Rotors schief, so dass deren Querschnitte sowohl kleiner als auch undurchlässiger sind als bei einem geraden Rotorkern. Als Folge hiervon können Probleme bei der Montage und Integration weiteren Komponenten an dem Rotor entstehen. Somit müssten beispielsweise kleinere und damit leistungsschwächere Magnete für den Rotor verwendet werden, wenn sich die zur Verfügung stehenden Nuten zwischen den Stegen am Rotor aufgrund der schiefen Bauweise verkleinern. Darüber hinaus könnte es durch einen schiefen Rotorkern auch zu Problemen beim Einführen und zentrischen Ausrichtung der Antriebswelle im Rotor kommen.

Übliche Positionierverfahren, wie etwa das rotatorische Stapeln der Blechlamellen, sind zwar dazu geeignet diese Wellenform der einzelnen Blechlamellen entsprechend auszugleichen, jedoch sind sie wiederum auch mit einer Winkeltoleranz bzw. einer Winkelungenauigkeit der einzelnen Blechlamellen zueinander behaftet, die z.B. zu einer unvorteilhaften Schraubenform des Rotorkerns führt. Diese nicht bündig aufeinander gelegten Blechlamellen haben zur Folge, dass der zur Isolation aufgetragene Kunststoff an der Aussenseite des Rotorkerns mit einem entsprechenden Sicherheitsaufschlag (Aufmass) aufgetragen werden muss, um auch an den Stufen zwischen den zueinander verschobenen Blechlamellen ein Mindestmass an Kunststoffisolation an allen Stellen der Innenseite des Rotorkerns sicherzustellen. Jedoch geht dieser Sicherheitsaufschlag an Kunststoffisolation zu Lasten des verfügbaren Raums für die Aufnahme möglichst grosser Permanentmagnete bzw. Rotorspulenwicklungen. Darüber hinaus kann der Sicherheitsaufschlag dazu führen, dass die Kunststoffisolation ungleichmässig auf dem Rotor verteilt ist, welches wiederum zu einer unerwünschten Unwucht des Rotors führen kann.

Aufgabe der vorliegenden Erfindung ist es diese vorstehend beschriebenen Probleme zu lösen und speziell eine Blechlamelle, insbesondere zur Bildung eines Rotorkerns für eine elektromagnetische Maschine sowie ein Verfahren zum Herstellen eines Rotorkerns bestehend aus einer Vielzahl an derartigen Blechlamellen bereitzustellen, welches die Fügetoleranzen bei einem Rotorkern minimiert, um hierdurch eine bestmögliche Nutzung des am Rotorkern vorhandenen Bauraums und insgesamt eine Effizienzsteigerung der durch den Stator und Rotor gebildeten elektromagnetischen Maschine zu erreichen.

Diese Aufgabe wird erfindungsgemäss durch den Gegenstand des unabhängigen Anspruchs 1 und 8 gelöst. Weitere Ausführungsformen des erfindungsgemässen Gegenstands finden sich in den abhängigen Ansprüchen.

Hierzu wird eine Blechlamelle, insbesondere zur Bildung eines Rotorkerns für eine elektromagnetische Maschine bereitgestellt, wobei die Blechlamelle eine Vorderseite und eine Rückseite, einen Grundkörper mit einem Mittelpunkt, einer Innenseite, einer Aussenseite, wenigstens einen ersten Steg und einen zweiten Steg sowie eine zwischen dem ersten Steg und dem zweiten Steg positionierte Nut enthält.

Erfindungsgemäss ist dabei wenigstens eine Ausrichtvorrichtung zum Ausrichten der Blechlamelle zu einer zweiten anliegenden Blechlamelle vorgesehen.

Des Weiteren wird hierzu ein Verfahren zum Herstellen eines Rotorkerns bestehend aus einer Vielzahl an derartigen Blechlamellen bereitgestellt.

Erfindungsgemäss sind zu diesem Verfahren die folgenden Schritte
- Aneinanderreihen der Blechlamellen zur Bildung eines Rotorkerns, wobei die Ausrichtvorrichtung einer Blechlamelle um einen vorbestimmten Winkel zu der Ausrichtvorrichtung einer jeweils nachfolgenden Blechlamelle angeordnet ist,
- Ausrichten der einzelnen Blechlamellen zueinander mit Hilfe der Ausrichtvorrichtung der entsprechenden Blechlamellen und einer Referenzvorrichtung, und
- Drehen der einzelnen Blechlamellen zueinander mit Hilfe des ersten Verbindungselement und des zweiten Verbindungselement der entsprechenden Blechlamellen
vorgesehen.

Gemäss einer weiteren vorteilhaften Ausgestaltung der vorliegenden Erfindung kann vorgesehen sein, dass mindestens ein erstes Verbindungselement und ein zweites Verbindungselement zum Verbinden der Blechlamelle mit einer zweiten anliegenden Blechlamelle, wobei das erste Verbindungselemente und das zweite Verbindungselement auf demselben Radius zu dem Mittelpunkt des Grundkörpers positioniert sind. Hierdurch lässt sich das erste und zweite Verbindungselement um einen gemeinsamen Mittelpunkt für eine entsprechende Positionierung zueinander verdrehen.

Des Weiteren kann entsprechend einer weiteren vorteilhaften Ausgestaltung der vorliegenden Erfindung vorgesehen sein, dass die Ausrichtvorrichtung wenigstens ein erstes Ausrichtelement aufweist, wobei das wenigstens erste Ausrichtelement ausgestaltet ist, um mit Hilfe einer Referenzvorrichtung einen durch aneinander gereihte Blechlamellen gebildeten Rotorkern auszurichten. Durch die spezifische Ausgestaltung des wenigstens ersten Ausrichtelementes ist es möglich, dass die Referenzvorrichtung an dem ersten Ausrichtelement wirken kann. Es ist dabei insbesondere möglich, dass die Referenzvorrichtung ein Bestandteil eines Umspritzwerkzeugs zum Anbringen einer Kunststoffisolationsschicht an der Aussenseite eines Rotorkerns ist, wodurch praktischerweise direkt nach dem Ausrichten der einzelnen Blechlamellen zueinander eine Kunststoffisolationsschicht aussen an dem ausgerichteten Rotorkern angebracht und damit auch die einzelnen Blechlamellen fest miteinander verbunden werden können. Hierbei ist es insbesondere vorteilhaft, wenn die Referenzvorrichtung in Form eines zylindrischen Aufnahmebehälters ausgestaltet ist, in den die Blechlamellen eingeführt und zueinander ausgerichtet werden können. Des Weiteren kann es auch möglich sein, dass die einzelnen Blechlamellen mittels eines separaten Fügeprozesses miteinander verbunden werden. Dieser wenigstens eine Fügeprozess kann dabei durchgeführt werden, wenn die Blechlamellen noch in der bzw. an der Referenzvorrichtung angeordnet sind, oder aber nachdem die zu einem Rotorkern aufeinander gelegten Blechlamellen wieder aus bzw. von der Referenzvorrichtung entfernt wurden. Zu den Fügeprozessen können unter anderem Kleben, Schweissen, Löten, Umformen, An- oder Einpressen oder ähnliches gehören.

Darüber hinaus kann es vorteilhaft sein, dass das erste Ausrichtelement als Erhebung auf der Aussenseite des Grundkörpers ausgestaltet ist. Hierdurch kann sichergestellt werden, dass das erste Ausrichtelement fest in der entsprechenden Referenzvorrichtung gehalten ist.

Es ist des Weiteren auch möglich, dass das erste Ausrichtelement als Bohrung durch den Grundkörper und ein zweites Ausrichtelement als Bohrung durch den Grundkörper ausgestaltet ist, wobei das als Bohrung ausgestaltete erste Ausrichtelement einen kleineren Durchmesser aufweist als das als Bohrung ausgestaltete zweite Ausrichtelement ist. Hierdurch kann sichergestellt werden, dass das erste Ausrichtelement fest in der entsprechenden Referenzvorrichtung gehalten ist und gleichzeitig das zweite Ausrichtelement zum Ausrichten der Blechlamellen in der entsprechenden Referenzvorrichtung verschiebbar ist.

Ausserdem kann das erste Verbindungselement auf der Vorderseite der Blechlamelle als eine Vertiefung ausgestaltet sein und das zweite Verbindungselement auf der Rückseite der Blechlamelle als eine zu der Vertiefung korrespondierende Erhebung ausgestaltet sein. Hierdurch ist gewährleistet, dass zum einen die einzelnen Blechlamellen miteinander verbunden sind und zum anderen die einzelnen Blechlamellen auch zueinander verdreht werden können, um eine Feinausrichtung der Blechlamellen zueinander zu erreichen.

Damit die einzelnen Blechlamellen lediglich auf einer vorbestimmten Rotationsachse zueinander verdreht werden können, kann gemäss einer weiteren vorteilhaften Ausgestaltung der vorliegenden Erfindung vorgesehen sein, dass die Erhebung und die Vertiefung kreisbogenförmig ausgestaltet sind, so dass die Erhebung in der Vertiefung entlang einer Umlaufbahn um den Mittelpunkt des Grundkörpers verschiebbar ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Fig. 1: eine Vorderansicht auf eine erfindungsgemässe Blechlamelle mit ersten und zweiten Ausrichtelementen, Verbindungselementen sowie einer Referenzvorrichtung gemäss einer ersten Ausführungsform;
- Fig. 2: eine Seitenansicht auf zwei Blechlamellen mit ersten und zweiten Verbindungselementen gemäss der ersten Ausführungsform;
- Fig. 3: Detailansicht der ersten und zweiten Verbindungselementen;
- Fig. 4: eine perspektivische Ansicht auf einen aus mehreren Blechlamellen zusammengesetzten Rotorkern mit Referenzvorrichtung;

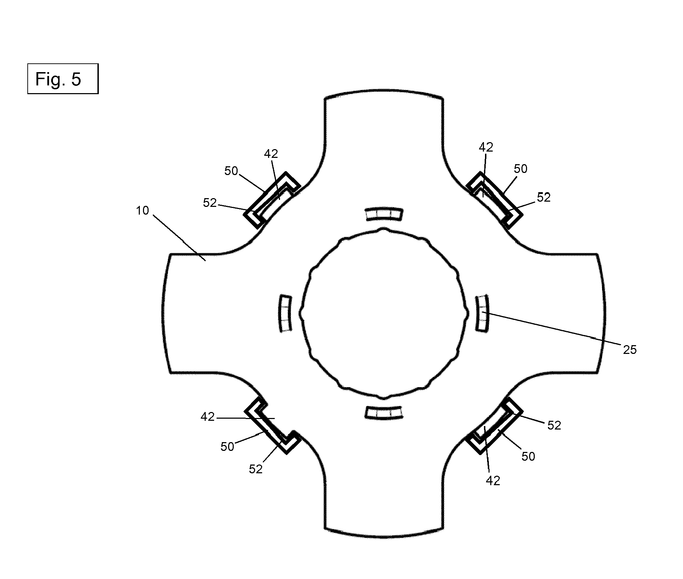

- Fig. 5: eine Vorderansicht auf einen Rotorkern mit mehrere hintereinander gereihte Blechlamellen in der Referenzvorrichtung gemäss der ersten Ausführungsform;
- Fig. 6: eine Vorderansicht auf eine erfindungsgemässe Blechlamelle mit ersten und zweiten Ausrichtelementen, Verbindungselementen sowie einer Referenzvorrichtung gemäss einer zweiten Ausführungsform;
- Fig. 7: eine Seitenansicht auf zwei Blechlamellen mit ersten und zweiten Verbindungselementen gemäss der zweiten Ausführungsform;

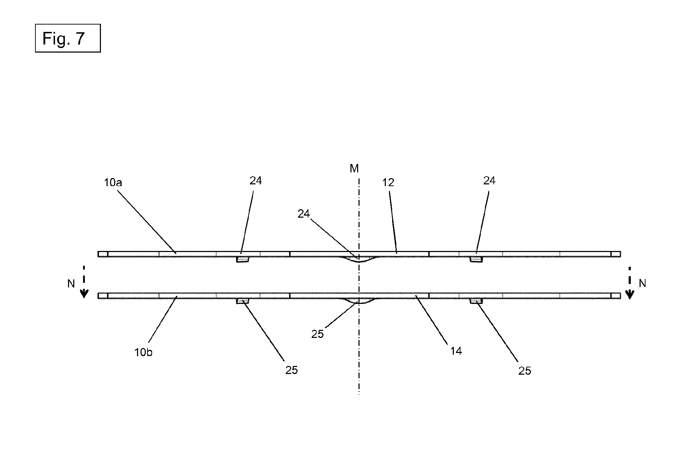

- Fig. 7: eine Vorderansicht auf mehrere hintereinander gereihte Blechlamellen gemäss der zweiten Ausführungsform und

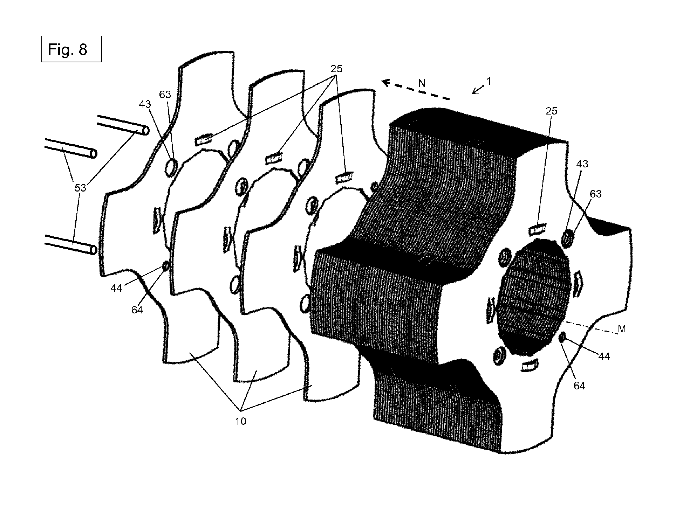

- Fig. 8: eine perspektivische Ansicht auf einen aus mehreren Blechlamellen zusammengesetzten Rotorkern mit Referenzvorrichtung; und

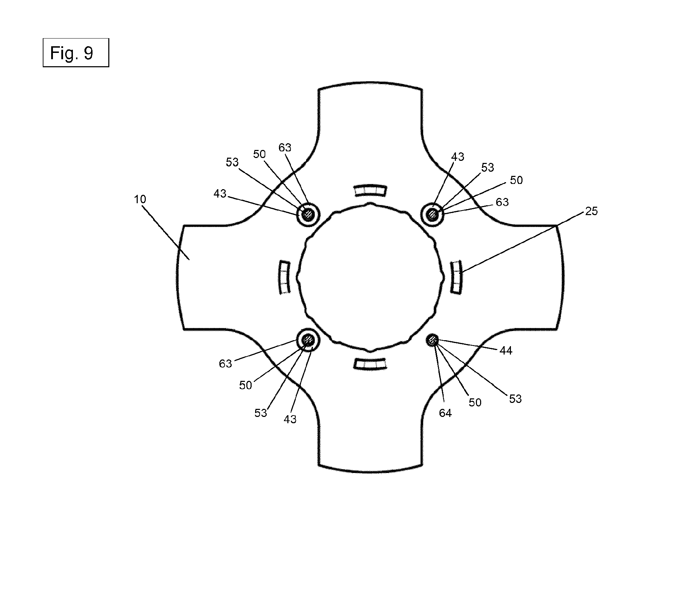

- Fig. 9: eine Vorderansicht auf einen Rotorkern mit mehrere hintereinander gereihte Blechlamellen in der Referenzvorrichtung gemäss der zweiten Ausführungsform.

### Ausführungsbeispiel:

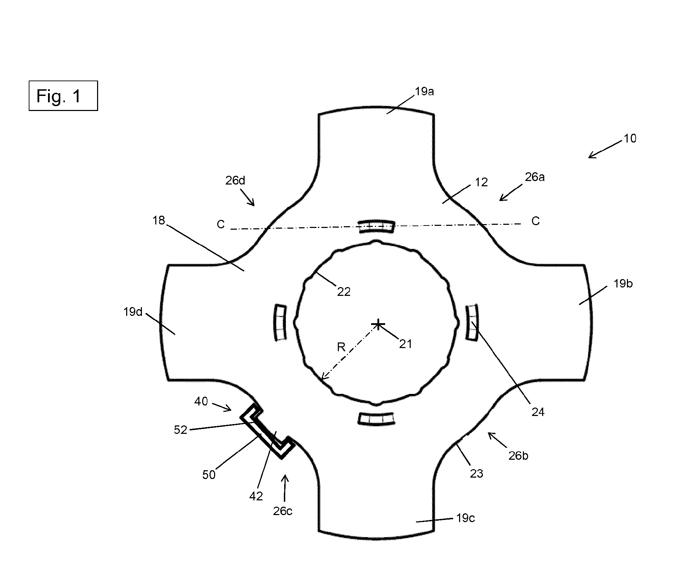

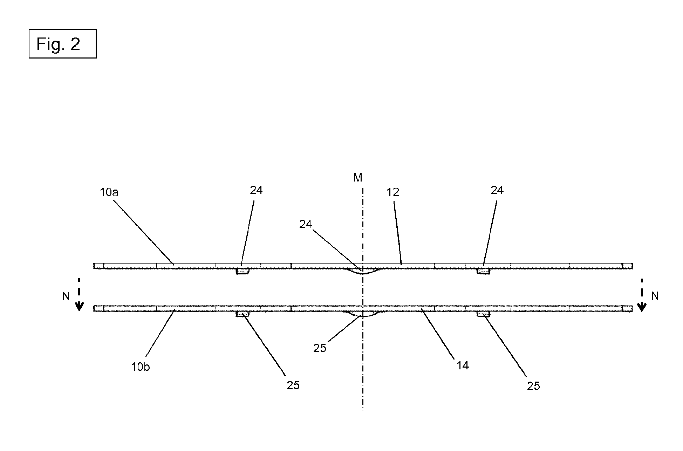

Fig. 1 und 2 zeigen eine Blechlamelle 10 zur Bildung eines Rotorkerns 1 für eine (nicht gezeigte) elektromagnetische Maschine, wie z.B. ein Elektromotor, gemäss einer ersten Ausgestaltungsform. Die Blechlamelle 10 enthält dabei im Wesentlichen eine Vorderseite 12, eine Rückseite 14 und einen Grundkörper 18.

Der Grundkörper 18 weist wiederum vier Stege 19a, 19b, 19c, 19d, eine zentrische Aufnahmeöffnung 20, einen Mittelpunkt 21, eine Innenseite 22, eine Aussenseite 23, ein erstes Verbindungselement 24, ein zweites Verbindungselement 25 und eine Ausrichtvorrichtung 40 auf. Die zentrische Aufnahmeöffnung 20 dient zur drehfesten Aufnahme einer nicht dargestellten Antriebswelle, mit der ein erzeugtes Drehmoment übertragen werden wird. Jeder Steg 19a, 19b, 19c, 19d ist im Wesentlichen in rechteckiger Form gestaltet und in gleichmässigen Abständen zueinander an der Aussenseite 23 um den Grundkörpers 18 positioniert. Die Stege 19a, 19b, 19c, 19d erstrecken sich dabei vom Grundkörper 18 in radialer Richtung nach aussen. Zwischen jedem Steg 19a, 19b, 19c, 19d befindet sich jeweils eine Nut 26a, 26b, 26c, 26d in Form einer U-förmigen Aussparung. Die Nut 26a, 26b, 26c, 26d dient zur Aufnahme eines nicht gezeigten Permanentmagneten. Alternativ kann in jeder Nut 26a, 26b, 26c, 26d anstelle eines Permanentmagneten auch eine (ebenfalls nicht gezeigte) Rotorspulenwicklung positioniert sein.

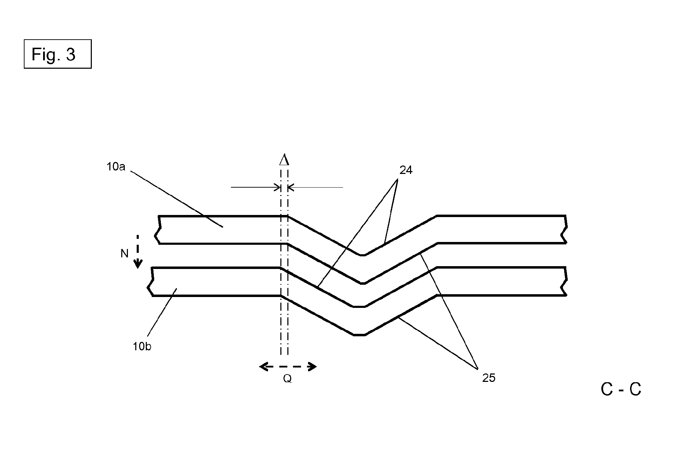

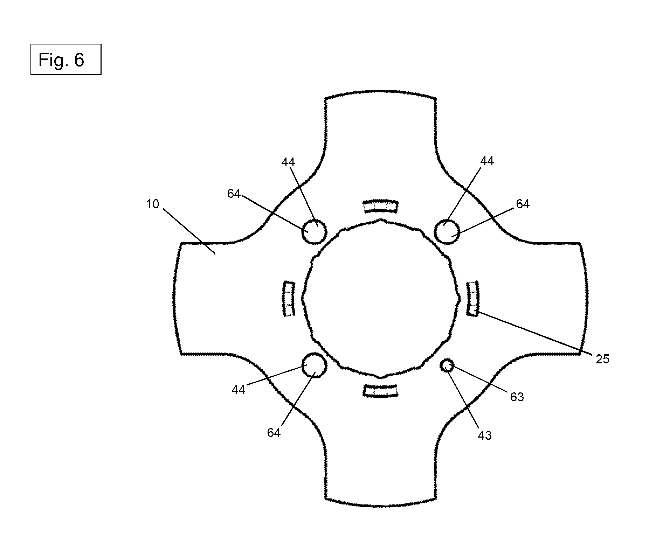

Wie ebenfalls in Fig. 1, 2 und 3 gezeigt, ist das erste Verbindungselement 24 in Form einer kreisbogenförmigen Vertiefung mit einer leicht abgerundeten Spitze ausgestaltet und befindet sich auf der Vorderseite 12 der Blechlamelle 10. Im Gegensatz dazu ist das zweite Verbindungselement 25 in Form einer zu der Vertiefung des ersten Verbindungselements 24 korrespondierenden kreisbogenförmigen Erhebung ausgestaltet und auf der Rückseite 14 der Blechlamelle 10 positioniert. Das erste Verbindungselement 24 und das zweite Verbindungselement 25 sind dabei entsprechend ihrer jeweiligen Position auf der Vorderseite 12 und der Rückseite 14 der Blechlamelle 10 übereinander positioniert, so dass die Vertiefung (erstes Verbindungselement 24) und die Erhebung (zweites Verbindungselement 25) auf demselben Radius bzw. Umfang zu dem Mittelpunkt 21 des Grundkörpers 18 liegen. Wenn die Blechlamellen 10 zur Bildung eines Rotorkerns 1 zusammengesetzt werden, wie in Fig. 6 gezeigt, wird die Erhebung (zweites Verbindungselement 25) in die Vertiefung (erstes Verbindungselement 24) eingeführt. Die Erhebung ist dabei um ein gewisses Ausmass Δ kürzer als die Vertiefung, so dass nach der Einführung der Erhebung einer oberen Blechlamelle 10a in die Vertiefung einer unteren Blechlamelle 10b die beiden Blechlamellen 10 zur gegenseitigen Ausrichtung relativ zueinander entlang dem Doppelpfeil Q (vgl. Fig. 3) verdreht werden können.

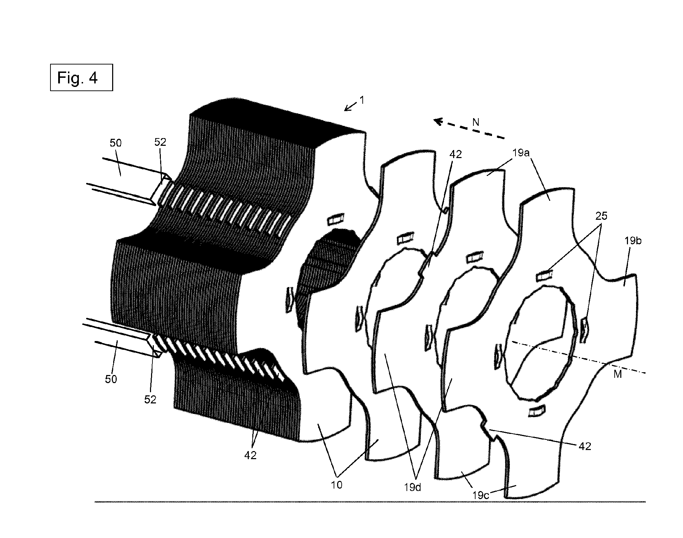

Wie in Fig. 1 und 4 gezeigt, enthält die Ausrichtvorrichtung 40 ein Ausrichtelement 42 in Form einer rechteckigen Erhebung an der Aussenseite 23 des Grundkörpers 18. Das Ausrichtelement 42 ist dabei zwischen zwei auf der Innenseite 22 des Grundkörpers 18 angeordneten Stegen 19c, 19d positioniert und dient dazu mit Hilfe einer Referenzvorrichtung 50 ein durch aneinander gereihte Blechlamellen 10 gebildetes Statorpaket 1 auszurichten. Entsprechend der ersten Ausgestaltungsform der Blechlamelle 10 ist die Referenzvorrichtung 50 dabei im Wesentlichen in Form eines länglichen Schachtes 52 ausgebildet, der sich koaxial zu einer Mittelachse M der Blechlamelle 10 erstreckt und in den das Ausrichtelement 42 passgenau und formschlüssig eingeführt werden kann, da die Breite des Schachts 52 der Breite der Erhebung des Ausrichtelements 42 entspricht.

In Fig. 6, 7, 8 und 9 ist eine zweite Ausgestaltungsform der erfindungsgemässen Blechlamelle 10 dargestellt. Die zweite Ausgestaltungsform entspricht dabei im Wesentlichen der ersten Ausgestaltungsform. Ein wesentlicher Unterschied zwischen der ersten und zweiten Ausgestaltungsform besteht jedoch in der Ausgestaltung der Ausrichtungsvorrichtung 40. Im Gegensatz zur ersten Ausgestaltungsform weist jedoch gemäss der zweiten Ausgestaltungsform die Ausrichtungsvorrichtung 40 ein erstes Ausrichtelement 43 und ein zweites Ausrichtelement 44 auf.

Gemäss der zweiten Ausgestaltungsform der Blechlamelle 10 ist das erste Ausrichtelement 43 in Form einer Bohrung 63 durch den Grundkörper 18 und das zweite Ausrichtelement 44 in Form einer Bohrung 64 durch den Grundkörper 18 gestaltet. Der Durchmesser der Bohrung 63 des ersten Ausrichtelements 43 ist dabei kleiner als der Durchmesser der Bohrung 64 des zweiten Ausrichtelements 44. Die kleinere Bohrung 63 des ersten Ausrichtelements 43 dient ebenfalls dazu mit Hilfe einer Referenzvorrichtung 50 ein durch aneinander gereihte Blechlamellen 10 gebildetes Rotorkerns 1 auszurichten. Entsprechend der zweiten Ausgestaltungsform der Blechlamelle 10 ist diese Referenzvorrichtung 50 im Wesentlichen in Form eines Stiftes 53 mit kreisrundem Durchmesser ausgestaltet. Der Durchmesser des Stiftes 53 kann passgenau und formschlüssig in die kleinere Bohrung 63 des ersten Ausrichtelements 43 eingeführt werden, da der Durchmesser des Stifts 53 der Referenzvorrichtung 50 dem Durchmesser der kleineren Bohrung 63 des ersten Ausrichtelements 43 entspricht.

Zur Bildung eines Rotorkerns 1 werden die einzelnen Blechlamellen 10 so zueinander positioniert und aneinander gereiht, dass jeweils das als Vertiefung ausgestaltete erste Verbindungselement 24 einer ersten Blechlamelle 10a zu dem als Erhebung ausgestalteten zweiten Verbindungselement 25 einer angrenzenden Blechlamelle 10b gerichtet ist, so dass die Erhebung in die Vertiefung eingeführt ist, vgl. Fig. 2 und 3. Dadurch, dass sich, wie vorstehend beschrieben, das als Erhebung ausgestaltete zweite Verbindungselement 25 nicht absolut passgenau in dem als Vertiefung ausgestaltete zweite Verbindungselement 24 befindet und sowohl die Erhebung als auch die Vertiefung kreisbogenförmig ausgestaltet sind, lassen sich die einzelnen Blechlamellen 10 zu einen gewissen Grad relativ zueinander verdrehen und gegeneinander ausrichten. Mit Hilfe der ersten und zweiten Verbindungselemente 24, 25 lassen sich somit herstellungsbedingte Ungenauigkeiten an den einzelnen Blechlamellen 10 durch ein Verdrehen ausgleichen.

Darüber hinaus werden die einzelnen Blechlamellen 10 zur Bildung eines geraden Rotorkerns 1 so zueinander positioniert und aneinander gereiht, dass diese entsprechend der Wellenform einzelner Blechlamellen 10 versetzt zueinander positioniert werden. Das heisst, dass zum Ausgleich einer ungewünschten Wellenform einer ersten Blechlamelle 10a die nachfolgende Blechlamelle 10b entsprechend versetzt auf diese vorangegangene Blechlamelle 10a gesetzt wird, wodurch diese Wellenform ausgeglichen und ein möglichst gerades Statorpaket 1 erzeugt werden kann, vgl. Fig. 4 und 8.

Beim Aneinanderreihen und Ausgleichen von Ungenauigkeiten der Blechlamellen 10 gemäss der zweiten Ausgestaltungsform ist zu beachten, dass beim versetzten Aneinanderreihen der Blechlamellen 10 entweder das erste Ausrichtelement 43 einer Blechlamelle 10b auf dem ersten Ausrichtelement 43 einer vorangegangenen Blechlamelle 10a liegt oder das erste Ausrichtelement 43 einer Blechlamelle 10b auf einem zweiten Ausrichtelement 44 einer vorangegangenen Blechlamelle 10a liegt, vgl. Fig. 8 und 9.

Wie in Fig. 8 und 9 gezeigt, hat das Aneinanderreihen bzw. das Aufeinanderlegen der einzelnen Blechlamellen 10 dabei so zu erfolgen, dass stets die Stege 19a, 19b, 19c, 19d der einzelnen Blechlamellen 10 übereinander liegen. Das bedeutet, dass Blechlamellen 10 mit den vier Stegen 19a, 19b, 19c, 19d in vier verschiedenen Positionen aufeinander gelegt werden können. Die Anzahl der Möglichkeiten des Aufeinanderlegens der Blechlamellen 10 korrespondiert daher mit der Anzahl an Stege 19a, 19b, 19c, 19d an den Blechlamellen 10.

Wie in Fig. 4 und 8 dargestellt, ist der Rotorkern 1 durch das verdrehte Aufeinanderstapeln der einzelnen Blechlamellen 10 zum Zweck des Ausgleichens von Ungenauigkeiten an den Blechlamellen 10 so ausgestaltet, dass eine Blechlamelle 10 um 90°, 180° oder 270° um die Mittelachse M gedreht werden.

Zur Ausrichtung der einzelnen Blechlamellen 10 des Rotorkerns 1 wird mit Hilfe der zur jeweiligen Ausgestaltungsform der entsprechenden Ausrichtelemente 42 die übereinstimmende, d.h. als Schacht 52 ausgestaltet Referenzvorrichtung 50 verwendet. Entsprechend der ersten Ausgestaltungsform der Blechlamelle 10 und der Referenzvorrichtung 50 werden die Blechlamellen 10 in Pfeilrichtung N auf die Referenzvorrichtung 50 gebracht, so dass der Schacht 52 dieser ersten Referenzvorrichtung 50 die Ausrichtelemente 42 (Erhebungen) aufnehmen kann, um so die einzelnen Blechlamellen 10 in die entsprechende Form und Richtung zwingen zu können.

Gemäss der zweiten Ausgestaltungsform der Blechlamelle 10 und der Referenzvorrichtung 50 ist, wie bereits vorstehend beschrieben, die Referenzvorrichtung 50 in Form eines zylindrischen Stifts 53 ausgestaltet. Zum Ausrichten der Blechlamellen 10 zueinander wird die als Stift 53 ausgestaltete Referenzvorrichtung in alle Bohrungen 63, 64 der Ausrichtelemente 43, 44 eingeführt. Da die Bohrung 63 der ersten Ausrichtelemente 43 kleiner ist als die Bohrungen 64 der zweiten Ausrichtelemente 44 können die ersten Ausrichtelemente 44 passgenau auf die als Stift 53 ausgestaltete Referenzvorrichtung 50 gezogen werden.

Dadurch, dass der Durchmesser des zweiten Ausrichtelements 44 grösser ist als der Durchmesser des ersten Ausrichtelements 43 kann das zweite Ausrichtelement 44 um die die als Stift 53 ausgestaltete Referenzvorrichtung 50 verschoben bzw. zur letztendlichen FeinAusrichtung der Blechlamelle 10 ausgerichtet werden.

Somit werden die Blechlamellen 10 mit Hilfe der Ausrichtvorrichtung 40 und der dazu passenden Referenzvorrichtung 50 zum Erzeugen eines geraden Rotorkerns 1 ausgerichtet.

## Patentansprüche

1. Blechlamelle (10), insbesondere zur Bildung eines Rotorkerns (1) für eine elektromagnetische Maschine, enthaltend
- eine Vorderseite (12) und eine Rückseite (14);
- einen Grundkörper (18) mit einem Mittelpunkt (21), einer Innenseite (22), einer Aussenseite (23), wenigstens einen ersten Steg (19a, 19b, 19c, 19d) und einen zweiten Steg (19a, 19b, 19c, 19d); sowie
- eine zwischen dem ersten Steg (19a, 19b, 19c, 19d) und dem zweiten Steg (19a, 19b, 19c, 19d) positionierte Nut,
**dadurch gekennzeichnet, dass** wenigstens eine Ausrichtvorrichtung (40) zum Ausrichten der Blechlamelle (10a) zu einer zweiten anliegenden Blechlamelle (10b) vorgesehen ist.

2. Blechlamelle (10) nach Anspruch 1,
**dadurch gekennzeichnet, dass** mindestens ein erstes Verbindungselement (24) und ein zweites Verbindungselement (25) zum Verbinden der Blechlamelle (10a) mit einer zweiten Blechlamelle (10b), wobei das erste Verbindungselemente (24) und das zweite Verbindungselement (25) auf demselben Radius (R) zu dem Mittelpunkt (21) des Grundkörpers (18) positioniert sind.

3. Blechlamelle (10) nach Anspruch 1 oder 2,
**dadurch gekennzeichnet, dass** die Ausrichtvorrichtung (40) wenigstens ein erstes Ausrichtelement (42, 43) aufweist, wobei das wenigstens erste Ausrichtelement (42, 43) ausgestaltet ist, um mit Hilfe einer Referenzvorrichtung (50) einen durch aneinander gereihte Blechlamellen (10) gebildeten Rotorkern (1) auszurichten.

4. Blechlamelle (10) nach Anspruch 3,
**dadurch gekennzeichnet, dass** das erste Ausrichtelement (42) als Erhebung auf der Aussenseite (23) des Grundkörpers (18) ausgestaltet ist.

5. Blechlamelle (10) nach Anspruch 3,
**dadurch gekennzeichnet, dass** das erste Ausrichtelement (43) als Bohrung (63) durch den Grundkörper (18) und ein zweites Ausrichtelement (44) als Bohrung (64) durch den Grundkörper (18) ausgestaltet ist, wobei das als Bohrung (63) ausgestaltete erste Ausrichtelement (43) einen kleineren Durchmesser aufweist als das als Bohrung (64) ausgestaltete zweite Ausrichtelement (44) ist.

6. Blechlamelle (10) nach wenigstens einem der Ansprüche 1 bis 5,
**dadurch gekennzeichnet, dass** das erste Verbindungselement (24) auf der Vorderseite (12) der Blechlamelle (10) als eine Vertiefung ausgestaltet ist und das zweite Verbindungselement (25) auf der Rückseite (14) der Blechlamelle (10) als eine zu der Vertiefung korrespondierende Erhebung ausgestaltet ist.

7. Blechlamelle (10) nach Anspruch 6,
**dadurch gekennzeichnet, dass** die Erhebung und die Vertiefung kreisbogenförmig ausgestaltet sind, so dass die Erhebung in der Vertiefung entlang einer Umlaufbahn um den Mittelpunkt (21) des Grundkörpers (18) verschiebbar ist.

8. Verfahren zum Herstellen eines Rotorkerns (1) bestehend aus einer Vielzahl an Blechlamellen (10) nach wenigstens einem der Ansprüche 1 bis 7,
**gekennzeichnet, durch** die Schritte
- Aneinanderreihen der Blechlamellen (10) zur Bildung eines zylindrischen Rotorkerns (1), wobei die Ausrichtvorrichtung (40) einer Blechlamelle (10) um einen vorbestimmten Winkel zu der Ausrichtvorrichtung (40) einer jeweils nachfolgenden Blechlamelle (10) angeordnet ist,
- Ausrichten der einzelnen Blechlamellen (10) zueinander mit Hilfe der Ausrichtvorrichtung (40) der entsprechenden Blechlamellen (10) und einer Referenzvorrichtung (50), und
- Drehen der einzelnen Blechlamellen (10) zueinander mit Hilfe des ersten Verbindungselement (24) und des zweiten Verbindungselement (25) der entsprechenden Blechlamellen (10).
